# EUROPÄISCHE PATENTSCHRIFT

(11) **EP 0 747 250 B1**
(45) Veröffentlichungstag und Bekanntmachung des Hinweises auf die Patenterteilung: **16.06.1999**
(21) Anmeldenummer: 96108131.2
(22) Anmeldetag: 22.05.1996
(51) Int. Cl.: B60J 7/22

(54) **Dynamische Windabweiseranordnung**
Dynamic wind deflector arrangement
Dispositif dynamique pour déflecteur de vent

(30) Priorität: 07.06.1995 DE 19520752
(43) Veröffentlichungstag der Anmeldung: 11.12.1996
(73) Patentinhaber: WEBASTO KAROSSERIESYSTEME GmbH, D-82131 Stockdorf (DE)
(72) Erfinder: Jankowski, Michael, 82131 Gauting (DE); Watzlawick, Robert, 81477 München (DE); Weigl, Willi, 81541 München (DE)
(74) Vertreter: Wiese, Gerhard

(56) Entgegenhaltungen:
- DE-A- 4 126 568
- DE-B- 1 103 780
- US-A- 4 844 538

## Beschreibung

Die Erfindung bezieht sich auf eine Windabweiseranordnung für ein Fahrzeugdach mit mindestens einer wahlweise mit einer Abdeckung verschließbaren Dachöffnung mit einem entlang der Vorderkante der Dachöffnung angeordneten Windabweiser mit einem Windabweiserkörper.

An Dachöffnungen von Fahrzeugen bilden sich besonders bei weit oder ganz geöffnetem Deckel im Fahrbetrieb niederfrequente Luftschwingungen aus. Bei bestimmten Fahrgeschwindigkeiten wirkt der Fahrzeuginnenraum zusammen mit der überströmten Dachöffnung als Resonator, so daß die Luftschwingungen eine beträchtliche Intensität entwickeln können und sich für die Fahrzeuginsassen sehr störend auswirken. Diese häufig als "Wummergeräusche" bezeichneten Schwingungen bilden sich als kohärente Strömungsstrukturen vom vorderen Rand der Dachöffnung über deren gesamten Fläche aus und erfahren bei bestimmten Geschwindigkeiten eine resonante Verstärkung durch das Volumen des Fahrzeuginnenraums.

Es ist bekannt, daß das Anbringen eines Windabweisers an der Vorderseite der Dachöffnung die Störgeräusche zu einem gewissen Grad verringert. Eine solche Anordnung ist beispielsweise in DE-PS 39 22 940 beschrieben. Dabei ist ein um eine Achse parallel zur Vorderkante der Dachöffnung ausschwenkbarer starrer, blattförmiger Windabweiserkörper mit einer Ausschwenkvorrichtung versehen, die ein selbsttätiges Ausschwenken des Windabweiserkörpers beim Öffnen eines die Dachöffnung verschließenden Deckels bewirkt.

Ähnliche Lösungsansätze umfassen die Verwendung eines Windabweiserblattes aus teilweise luftdurchlässigem Material (DE-PS-40 39 485) oder die Ausbildung von Scharten in der Oberkante des Windabweiserblatts (DE-OS-40 33 027).

Allen Windabweiseranordnungen gemeinsam ist, daß in der Regel zur Erzielung einer optimalen Reduzierung der Störgeräusche relativ große Ausstellhöhen des Windabweisers nötigesind. Große Ausstellhöhen sind in der Praxis oft aufgrund konstruktiver, wirtschaftlicher oder ästhetischer Überlegungen nicht zu realisieren, so daß eine optimale Geräuschunterdrückung oft nicht möglich ist.

Es ist daher Aufgabe der vorliegenden Erfindung, eine Windabweiseranordnung für Dachöffnungen bei Fahrzeugen zu schaffen, welche bei möglichst geringer Ausstellhöhe eine effiziente Unterdrückung von Störgeräuschen bewirkt.

Die Aufgabe wird ausgehend von einer Windabweiseranordnung der eingangs erwähnten Art erfindungsgemäß dadurch gelöst, daß die Windabweiseranordnung derart aufgebaut und/oder gelagert ist, daß bei geöffneter Abdeckung der Dachöffnung und mindestens ab einer vorgegebenen Fahrzeuggeschwindigkeit der Windabweiserkörper in seiner Gesamtheit oder in Teilen in Bezug auf die Dachöffnung periodisch bewegt ist.

Diese erfindungsgemäße Lösung bewirkt eine effiziente Unterdrückung von Störgeräuschen durch eine periodische Verwirbelung der anströmenden Luft, wodurch die Ausstellhöhe reduziert werden kann.

In weiterer vorteilhafter Ausgestaltung der Erfindung weist der Windabweiserkörper ein vom Fahrtwind zu Schwingungen anregbares Schwingungselement auf, das beispielsweise aus einem vorgespannten Gummiband besteht oder als Leiste ausgeführt ist, welche mit abgestimmten Federn an Halteelementen befestigt ist.

Diese Ausführungsform ist besonders einfach aufgebaut und kann kostengünstig hergestellt und montiert werden.

In einer alternativen Ausgestaltung der Erfindung weist der Windabweiserkörper ein drehbares Rotationselement auf, das beispielsweise als Leiste mit ellipsenförmigem Querschnitt ausgebildet ist. Diese Ausführungsform gestattet es, eine effiziente Störgeräuschunterdrückung bereits mit einer sehr geringen Aussteilhöhe zu erzielen.

Weitere vorteilhafte Merkmale der Erfindung ergeben sich aus den weiteren Unteransprüchen.

Ausführungsbeispiele der erfindungsgemäßen Windabweiseranordnung sind nachstehend anhand der Zeichnungen naher beschrieben. Es zeigen:
- FIG. 1: eine perspektivische Darstellung einer erfindungsgemäßen Ausführungsform einer Windabweiseranordnung;
- FIG. 2: eine Querschnittdarstellung der in FIG. 1 dargestellten Windabweiseranordnung; und
- FIG. 3: eine perspektivische Darstellung einer weiteren erfindungsgemäßen Ausführungsform einer Windabweiseranordnung

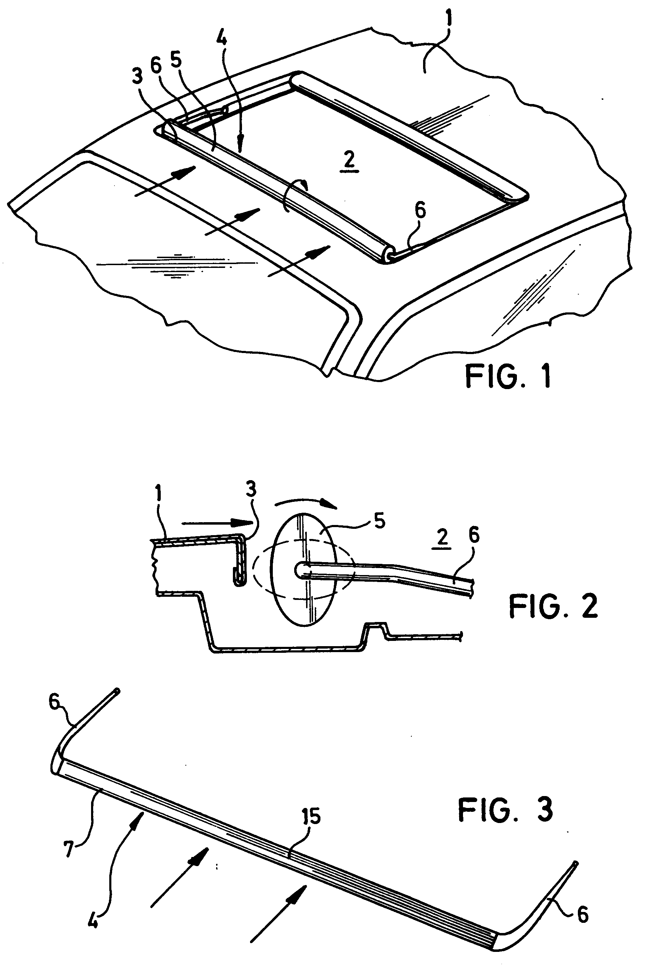

Bei der in FIG. 1 gezeigten Ausführungsform der Erfindung ist eine in einem Fahrzeugdach 1 ausgebildete Dachöffnung 2 mit einem an der Vorderkante 3 der Dachöffnung 2 angeordneten Windabweiser 4 versehen. Die Dachöffnung 2 kann wahlweise auf bekannte Weise mit einer Abdeckung verschlossen werden (nicht dargestellt). Der Windabweiser 4 weist einen als Windabweiserkörper 7 mit einem um seine Längsachse drehbaren Rotationselement 5 auf. Der Windabweiserkörper ist an seinen beiden Enden mit Halteelementen 6 verbunden, die ihrerseits schwenkbar an einem dachfesten Element, z.B. einem Halterungseinsatz in der Dachöffnung 2, befestigt sind. Die Rotationsachse des Rotationselements 5 und die Schwenkachse der Halteelemente 6 liegen parallel zur Vorderkante 3 der Dachöffnung 2. Bei verschlossener Dachöffnung 2, d.h. bei geschlossener Abdeckung, wird der Windabweiser 4 zurückgeschwenkt und kommt unter der Abdeckung zu liegen. Eine Anordnung zur selbsttätigen Koordination des Öffnens der Abdeckung und des Ausschwenkens des Windabweisers 4 bzw. des Schließens der Abdeckung und des Zurückschwenkens des Windabweisers 4 ist beispielsweise aus DE-PS-34 15 361 bekannt.

In FIG. 2 ist die Vorderkante 3 der Dachöffnung 2 mit dem Windabweiser 4 im Querschnitt in ausgeschwenkter Position, d.h. bei geöffneter Abdeckung, dargestellt. Es ist zu erkennen, daß das Rotationselement 5 als Leiste mit ellipsenförmigem Querschnitt ausgebildet ist, wobei die Leiste eine solche Höhe einnimmt, daß in der Stellung, wenn der lange Durchmesser nach oben steht, die Leiste zum Teil über den oberen Rand der Vorderkante 3 der Dachöffnung 2 hinausragt, und in der Stellung, wenn der kurze Durchmesser nach oben steht, die Leiste ganz unterhalb des oberen Rands der Vorderkante 3 liegt. Die Anströmung durch den Fahrtwind ist durch einen Pfeil angedeutet. Die Leiste wird über einen Motor und eine Antriebseinheit (nicht dargestellt) so in eine Rotation versetzt, daß sich der obengelegene Umfangsteil der Leiste in Richtung der Anströmung bewegt. Ferner ist eine Steuerung des Antriebsmotors vorgesehen (nicht dargestellt), die bewirkt, daß die Rotation von der Fahrzeuggeschwindigkeit abhängt. So wird das Rotationselement 5 vorzugsweise erst dann in Bewegung versetzt, wenn eine vorgegebene Fahrzeuggeschwindigkeit überschritten ist, wobei die Drehzahl des Rotationselements von der Fahrzeuggeschwindigkeit abhängen kann. Durch die Rotation der Leiste mit ellipsenförmigem Querschnitt wird Luftstrom des Fahrtwindes an der Vorderkante 3 der Dachöffnung 2 periodisch, d.h. der doppelten Drehzahl entsprechend, gestört. Diese periodische Störung kann die Ausbildung der oben erwähnten Resonanzen im Fahrzeuginnenraum deutlich verringern, so daß die Belästigung der Fahrzeuginsassen durch von der Dachöffnung verursachte Störgeräusche vermindert wird.

Der Querschnitt des Rotationselements 5 ist in keiner Weise auf den in FIG. 2 gezeigten ellipsenförmigen Querschnitt beschränkt. Ebenso kann mit jeder anderen nicht kreisförmigen Querschnittform eine periodische Störung der Anströmung bewirkt werden. Die Querschnittform muß auch keineswegs über die gesamte Länge des Rotationselements 5 konstant sein, wobei sich das Rotationselement selbst beispielsweise auch nur über einen Teil der Länge der Vorderkante 3 der Dachöffnung 2 erstrecken kann. Ferner wird auch nicht notwendigerweise ein Motor zum Antrieb des Rotationselements 5 benötigt. Durch entsprechende Gestaltung des Rotationselements 5 kann dieses auch vom Fahrtwind selbsttätig in Rotation versetzt werden. Das Rotationselement 5 kann bezüglich der Vorderkante 3 der Dachöffnung 2 auch in anderer Höhe und anderem Abstand angeordnet werden, als in FIG. 2 gezeigt. Die günstigsten Parameter für die Ausbildung der Windabweiseranordnung hängen stark vom jeweiligen Fahrzeugtyp ab. Die Rotationsrichtung kann auch umgekehrt werden, und die Befestigung am dachfesten Element kann auf andere Weise ausgeführt sein.

Eine zweite erfindungsgemäße Ausführungsform der Windabweiseranordnung ist in FIG. 3 gezeigt. In ähnlicher Weise wie oben beschrieben und in FIG. 1 gezeigt, ist der Windabweiserkörper 7 über seitliche Halteelemente mit einem dachfesten Element verbunden. In dieser Ausführungsform weist der Windabweiserkörper ein Schwingungselement 15 auf. Im gezeigten Beispiel ist dieses als vorgespanntes Band aus einem elastischen Material, z.B. Gummi, ausgeführt. Wie beim oben beschriebenen ersten Ausführungsbeispiel wird die Windabweiseranordnung 4 bei geöffneter Abdeckung der Dachöffnung 2 ausgeschwenkt. In ausgeschwenkter Stellung wird das Schwingungselement 15 vom Fahrtwind angeströmt, so daß es in mechanische Schwingungen, im wesentlichen Biegeschwingungen, versetzt wird, deren Frequenz und Amplitude von Material, Form und Vorspannung des Schwingungselements 15 sowie von der Fahrtgeschwindigkeit und dem Fahrzeugtyp abhängen. Das Schwingungselement 15 kann dabei so angeordnet sein, daß es sowohl überströmt als auch zusätzlich unterströmt wird. Die sich ausbildende Schwingung des Schwingungselements 15 bewirkt wie beim ersten Ausführungsbeispiel eine periodische Störung der Anströmung durch den Fahrtwind an der Vorderkante 3 der Dachöffnung 2, wodurch die Ausbildung von Resonanzen im Fahrzeuginnenraum verringert wird.

Alternativ kann das Schwingungselement 15 auch aus einer festen Leiste, z.B. aus Metall oder Kunststoff, bestehen, die mit entsprechend abgestimmten Federn an den Halteelementen 6 aufgehängt ist.

Generell kann das Schwingungselement auch so ausgeführt sein, daß es sich nur über einen Teil der Länge der Vorderkante 3 der Dachöffnung 2 erstreckt.

Es kann auch der gesamte Windabweiser 4 auf Federn schwingend ausgebildet sein, wobei sie über diese Federn mit einem dachfesten Element verbunden ist.

Zur Vermeidung eines Überschwingens ist die Windabweiseranordnung bevorzugt so ausgeführt, daß die maximale Schwingungsamplitude begrenzt wird.

Die Windabweiseranordnung gemäß der vorliegenden Erfindung kann in Verbindung mit jedem Dachtypus, wie z.B., Spoilerdächern, Schiebedächern, Schiebehebedächern, Faltdächern und Lamellendächern, verwendet werden. Sie läßt sich auf einfache Weise an jeden beliebigen Fahrzeugtyp anpassen und durch Variation der relevanten Parameter optimieren.

| **Bezugszeichenliste** | |
|---|---|
| Fahrzeugdach | **1** |
| Dachöffnung | **2** |
| Vorderkante der Dachöffnung | **3** |
| Windabweiser | **4** |
| Rotationselement | **5** |
| Halteelement | **6** |
| Windabweiserkörper | **7** |
| | **8** |
| | **9** |
| | **10** |
| | **11** |
| | **12** |
| | **13** |
| | **14** |
| Schwingungselement | **15** |

## Patentansprüche

1. Windabweiseranordnung für ein Fahrzeugdach mit mindestens einer wahlweise mit einer Abdeckung verschließbaren Dachöffnung (2) mit einem entlang der Vorderkante (3) der Dachöffnung (2) angeordneten Windabweiser mit einem Windabweiserkörper (7), **dadurch gekennzeichnet**, daß die Windabweiseranordnung derart aufgebaut und/oder gelagert ist, daß bei geöffneter Abdeckung der Dachöffnung (2) und mindestens ab einer vorgegebenen Fahrzeuggeschwindigkeit der Windabweiserkörper (7) in seiner Gesamtheit oder in Teilen in Bezug auf die Dachöffnung periodisch bewegt ist.

2. Windabweiseranordnung nach Anspruch 1, **dadurch gekennzeichnet**, daß der Windabweiserkörper (7) an seinen Enden jeweils mit einem Ende eines sich nach hinten erstreckenden Halteelements (6) verbunden ist, dessen anderes Ende schwenkbar mit einem dachfesten Element verbunden ist, wobei diese Drehung um eine parallel zur Vorderkante (3) der Dachöffnung (2) liegende Achse erfolgt.

3. Windabweiseranordnung nach Anspruch 1 oder 2, **dadurch gekennzeichnet**, daß der Windabweiserkörper (7) ein vom Fahrtwind zu Schwingungen anregbares Schwingungselement (15) aufweist oder insgesamt ein solches bildet.

4. Windabweiseranordnung nach Anspruch 3, **dadurch gekennzeichnet**, daß das Schwingungselement (15) aus einem vorgespannten Gummiband besteht.

5. Windabweiseranordnung nach Anspruch 3, **dadurch gekennzeichnet**, daß das Schwingungselement (15) als Leiste ausgeführt ist, welche mit abgestimmten Federn an den Halteelementen (6) befestigt ist.

6. Windabweiseranordnung nach einem der vorhergehenden Ansprüche, **dadurch gekennzeichnet**, daß der Windabweiserkörper (7) so angeordnet ist, daß er nur eine Überströmung erlaubt.

7. Windabweiseranordnung nach Anspruch 6, **dadurch gekennzeichnet**, daß der Windabweiserkörper (7) so angeordnet ist, daß er zusätzlich eine Unterströmung erlaubt.

8. Windabweiseranordnung nach einem der Ansprüche 3 bis 7, **dadurch gekennzeichnet**, daß eine Begrenzung der maximalen Schwingungsamplitude des Schwingungselements (15) vorgesehen ist.

9. Windabweiseranordnung nach Anspruch 1 oder 2, **dadurch gekennzeichnet**, daß der Windabweiserkörper (7) ein drehbares Rotationselement (5) aufweist.

10. Windabweiseranordnung nach Anspruch 9, **dadurch gekennzeichnet**, daß das Rotationselement (5) als eine Leiste mit ellipsenförmigem Querschnitt ausgebildet ist.

11. Windabweiseranordnung nach Anspruch 9 oder 10, **dadurch gekennzeichnet**, daß die Rotationsachse des Rotationselements (5) parallel zur Vorderkante (3) der Dachöffnung (2) liegt.

12. Windabweiseranordnung nach einem der Ansprüche 9 bis 11, **dadurch gekennzeichnet**, daß das Rotationselement (5) von einem Antrieb zu einer Rotationsbewegung angetrieben wird.

13. Windabweiseranordnung nach Anspruch 12, **dadurch gekennzeichnet**, daß die Rotationsgeschwindigkeit des Rotationselements (5) in Abhängigkeit von der Fahrzeuggeschwindigkeit einstellbar ist.

## Claims

1. A wind deflector arrangement for a vehicle roof having at least one roof opening (2) which can be optionally closed by a covering and with, arranged along the front end (3) of the roof opening (2), a wind deflector with a wind deflector member (7), characterised in that the wind deflector arrangement is so constructed and/or mounted that when the covering of the roof opening is open and at least with effect from a given vehicle speed, the wind deflector member (7) in its entirety or in parts is moved periodically in respect of the roof opening.

2. A wind deflector arrangement according to claim 1, characterised in that each end of the wind deflector member (7) is connected to a rearwardly extending retaining element (6), the other end of which is pivotally connected to an element rigid with the roof, this rotation taking place about an axis disposed parallel with the front edge (3) of the roof opening (2).

3. A wind deflector arrangement according to claim 1 or 2, characterised in that the wind deflector member (7) comprises or generally constitutes an oscillating element (15) which can be caused to vibrate by the slipstream.

4. A wind deflector arrangement according to claim 3, characterised in that the oscillating element (15) consists of a pre-tensioned rubber strip.

5. A wind deflector arrangement according to claim 3, characterised in that the oscillating element (15) is constructed as a strip which is fixed to the retaining elements (6) by fitted springs.

6. A wind deflector arrangement according to one of the preceding claims, characterised in that the wind deflector member (7) is so disposed that it only allows flow over it.

7. A wind deflector arrangement according to claim 6. characterised in that the wind deflector member (7) is so disposed that it additionally allows flow under it.

8. A wind deflector arrangement according to one of claims 3 to 7, characterised in that the maximum amplitude of vibration of the oscillating element (15) is limited.

9. A wind deflector arrangement according to claim 1 or 2, characterised in that the wind deflector member (7) comprises a rotatable element (5).

10. A wind deflector arrangement according to claim 9, characterised in that the rotating element (5) is constructed as a strip of elliptical cross-section.

11. A wind deflector arrangement according to claim 9 or 10, characterised in that the axis of rotation of the rotating element (5) is parallel with the front edge (3) of the roof opening (2).

12. A wind deflector arrangement according to one of claims 9 to 11, characterised in that the rotating element (5) is driven to perform a rotary movement by a drive means.

13. A wind deflector arrangement according to claim 12, characterised in that the speed of rotation of the rotating element (5) is adjustable as a function of the vehicle speed.

## Revendications

1. Dispositif déflecteur de vent pour un toit de véhicule présentant au moins une ouverture de toit (2) obturable au choix par un couvercle équipé le long du bord avant (3) de l'ouverture du toit d'un déflecteur comportant un corps principal (7),
caractérisé en ce que
le dispositif déflecteur est conçu et/ou monté de manière que le corps (7), lorsque le couvercle de l'ouverture (2) du toit est ouvert et au moins à partir d'une vitesse donnée du véhicule, se trouve déplacé en entier ou en certaines parties, périodiquement, par rapport à l'ouverture du toit.

2. Dispositif déflecteur selon la revendication 1,
caractérisé en ce que
le corps (7) de déflecteur est relié, à chacune de ses extrémités, à une extrémité d'un élément de maintien (6) qui s'étend vers l'arrière et dont l'autre extrémité est reliée avec possibilité de basculement, à un élément du toit fixe, ce basculement s'effectuant sur un axe parallèle au bord avant (3) de l'ouverture de toit (2).

3. Dispositif déflecteur selon la revendication 1 ou 2,
caractérisé en ce que
le corps (7) du déflecteur comprend un élément vibrant (15) qui peut être excité par la vitesse du vent, ou est tout entier cet élément.

4. Dispositif déflecteur selon la revendication 3,
caractérisé en ce que
l'élément vibrant (15) est une bande de caoutchouc sous tension.

5. Dispositif déflecteur selon la revendication 3,
caractérisé en ce que
l'élément vibrant (15) a la forme d'une barrette fixée aux éléments de maintien (6), par des ressorts appropriés.

6. Dispositif déflecteur selon une des revendications précédentes,
caractérisé en ce que
le corps (7) du déflecteur est disposé de manière à permettre à l'air de passer seulement par dessus.

7. Dispositif déflecteur selon la revendication 6,
caractérisé en ce que
le corps (7) du déflecteur est disposé de manière à permettre à l'air de passer, en plus, par dessous le corps.

8. Dispositif déflecteur selon l'une des revendications 3 à 7,
caractérisé en ce qu'
il est prévu une limitation de l'amplitude maximale des vibrations de l'élément (15).

9. Dispositif déflecteur selon l'une des revendications 1 ou 2,
caractérisé en ce que
le corps (7) du déflecteur comporte un élément tournant (5).

10. Dispositif déflecteur selon la revendication 9,
caractérisé en ce que
l'élément tournant (5) est constitué par une barrette de section elliptique.

11. Dispositif déflecteur selon la revendication 9 ou 10,
caractérisé en ce que
l'axe de rotation de l'élément tournant (5) est parallèle au bord avant (3) de l'ouverture (2) du toit.

12. Dispositif déflecteur selon l'une des revendications précédentes 9 à 11,
caractérisé en ce que
l'élément tournant (5) est mis en rotation par un entraîneur.

13. Dispositif déflecteur selon la revendication 12,
caractérisé en ce que
la vitesse de rotation de l'élément tournant (5) est réglable en fonction de la vitesse du véhicule.
